# EUROPEAN PATENT APPLICATION

(11) **EP 4 303 064 A1**
(43) Date of publication of application: **10.01.2024**
(21) Application number: 22182714.0
(22) Date of filing: 04.07.2022
(51) Int. Cl.: B60L 50/64, B60L 53/80, B60D 1/00

(54) **BATTERY CAGE KICK STAND OF UNDERGROUND MINING VEHICLE AND BATTERY CAGE COMPRISING BATTERY CAGE KICK STAND**

(71) Applicant: Sandvik Mining and Construction Oy, 33330 Tampere (FI)
(72) Inventor: Laihonen, Esko, 20101 Turku (FI)
(74) Representative: Sandvik

(57) **Abstract**

A battery cage kick stand (10) of an underground mining vehicle comprising a bar (11) and an actuator (12), wherein the battery cage kick stand (10) is arranged to be installed to a battery cage having a perimeter so that the bar (11) is movable between retracted position and extended position so that in retracted position, the bar (11) is at least partly retracted inside the perimeter of the battery cage and, in extended position, the bar (11) is at least partly extended outside of the perimeter of the battery cage for supporting the battery cage to the ground, and the actuator (12) is hingedly connected to the bar (11) for moving the bar between the retracted position and the extended position.

## Description

### TECHNICAL FIELD

The present invention relates to a battery cages of mining vehicles and kick stands of such battery cages.

### BACKGROUND OF THE ART

The mining vehicles are more and more electric-powered. They require a lot of power to operate, and big batteries are still slow to recharge once they are empty. Another option is to swap the batteries completely once they are empty. Many of the swapping-capable battery vehicles in use today require a gantry crane to lift and lower batteries during the swap. This requires costly infrastructure, and the underground road network and operation sites have limited room for any cranes.

### OBJECTIVE OF THE INVENTION

The objective of the device is to alleviate the disadvantages mentioned above.

In particular, it is an objective of the present device to provide battery cage support for a mining vehicle for swapping batteries safely and cost efficiently in underground operation sites.

### SUMMARY

According to a first aspect, the present invention provides a device for supporting a battery cage of an underground mining vehicle.

A battery cage kick stand of an underground mining vehicle comprises a bar and an actuator, wherein the kick stand is arranged to be installed to a battery cage having a perimeter so that the bar is movable between retracted position and extended position so that in retracted position, the bar is at least partly retracted inside the perimeter of the battery cage and, in extended position, the bar is at least partly extended outside of the perimeter of the battery cage for supporting the battery cage to the ground. The actuator is hingedly connected to the bar for moving the bar between the retracted position and the extended position.

The advantage of the device is that it is more simple and cheaper than the known solutions. Further, the same device may be used as a part of a towing structure.

In an embodiment of the device, it comprises at least two levers, wherein
- a first lever is hingedly connectable to a battery cage of the underground mining vehicle, and hingedly connected to the actuator,
- a second lever is hingedly connected to the bar and to the actuator.

In an embodiment of the device, the first lever, the second lever and the bar are aligned, when the bar is in the extended position.

In an embodiment of the device, the first lever and the second lever are connected to third hinge means in the actuator so that the levers are rotatable in a same plane.

In an embodiment of the device, an angle is formed between the first lever and the second lever extending from the third hinge means when the bar is not in the extended position.

In an embodiment of the device, the actuator is configured to provide reciprocating motion causing the movement of the bar.

In an embodiment of the device, the reciprocating motion is linear motion having a direction which differs from the direction of the bar movement.

In an embodiment of the device, the actuator is hydraulic, pneumatic or electric actuator.

In an embodiment of the device, the bar is configured receive a towing element.

According a second aspect, the present invention provides a battery cage of an underground mining vehicle, comprising a battery cage kick stand according to any one of the preceding embodiments, wherein the battery cage comprises an opening extending into the battery cage, wherein the bar is exposed through the opening.

In an embodiment of the device, a towing element is configured to be fastened to the bar through the opening.

In an embodiment of the device, the bar is extending outside of the perimeter of the battery cage for supporting the battery cage to the ground.

In an embodiment of the device, the battery cage kick stand is enclosed by a housing of the battery cage.

In a third aspect, the invention provides an underground mining vehicle comprising a battery cage according to any one of the preceding embodiments.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** shows a battery cage 1 of an underground mining vehicle comprising a battery cage kick stand,
**Fig. 2** shows the battery cage of an underground mining vehicle as in figure 1, but the battery cage kick stand components are visible,
**Fig. 3** shows a cross-section of a side view of the battery cage comprising a battery cage kick stand in extended position,
**Fig. 4** shows similar battery cage as in figures 1 to 3 but the bar is in retracted position, **and**
**Fig. 5** shows another embodiment of the battery cage kick stand.

### DETAILED DESCRIPTION

The underground mining vehicle may be a mine machine or a construction machine e.g. a rock drilling rig, a development drill, a tunneling drilling machine, a surface drilling machine, a bolting or reinforcing vehicle, a rock removal machine, a long hole drill rig, an explosive charging machine, a loader, a transport vehicle, a loading machine, or hauling machine, setting vehicle of gallery arcs or nets, a concrete spraying machine, a crusher, a measuring vehicle, a passenger transport vehicle, or a loading or a hauling machine. The common feature for all these vehicles is that they are designed to operate in harsh conditions underground, wherein space is limited. In the following chapters, term vehicle is used but it should be understood as an underground mining vehicle described herein.

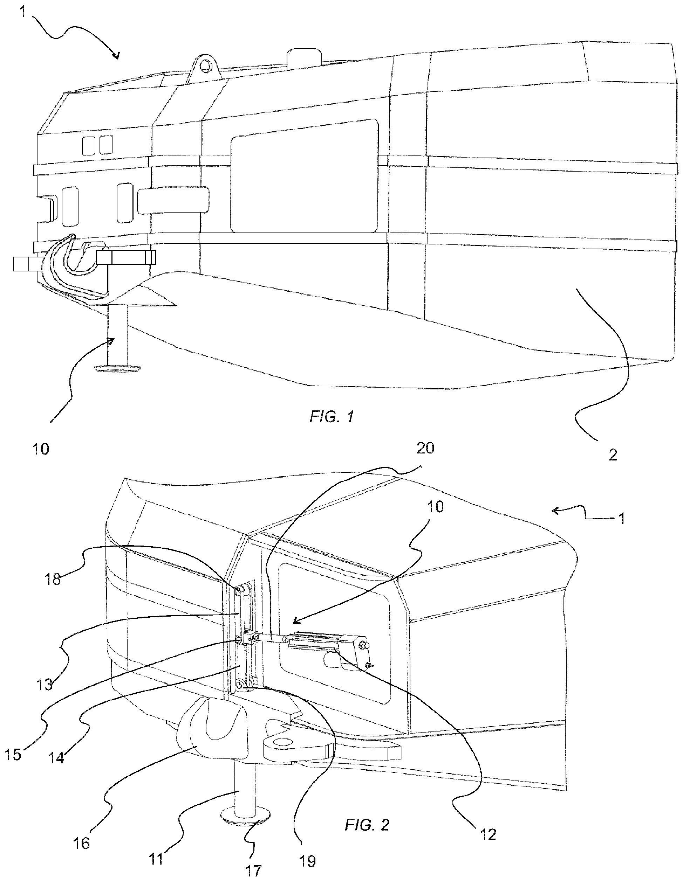

Figure 1 shows a battery cage 1 of an underground mining vehicle comprising a battery cage kick stand 10. The battery cage has a housing 2, which defines the perimeter of the battery cage. The battery kick stand is mostly enclosed by the housing 2 so that only part of the battery cage kick stand is exposed to the environment. Optionally, the battery cage kick stand may be completely enclosed by the housing, when it is in retracted position (will be explained later). The housing may comprise a removable hatch, which may be removed to access the components of the battery cage kick stand. Optionally, the battery cage kick stand is not enclosed by the housing, i.e. it is completely or at least mostly exposed to the environment.

Figure 2 shows the battery cage of an underground mining vehicle as in figure 1, but the battery cage kick stand components, or at least some of them, are visible. The battery kick stand 10 comprises a bar 11 and an actuator 12. The battery kick stand 10 is installed to the battery cage 1 so that the bar 11 is movable between a retracted position and extended position. In retracted position, the bar 11 is at least partly retracted inside the perimeter of the battery cage 1. In extended position, the bar is at least partly extended outside of the perimeter of the battery cage 1 for supporting the battery cage 1 to the ground. The actuator 12 is hingedly, i.e. with at least one hinge means, connected to the bar 11 for moving the bar between the retracted position and the extended position.

The battery kick stand is used for supporting a battery cage to the ground for example during battery swap. When the battery cage is fastened to the underground mining vehicle and the vehicle is moving or working, the bar of the battery kick stand is retracted inside the battery cage perimeter. This protects the bar from external impacts. When the battery cage needs to be replaced with a new one, the bar is extended outside of the battery cage and towards the ground, whereby the battery cage may support itself during the battery swap. In other words, the battery kick stand comprises a reciprocating bar moving between retracted position and extended position and the movement is achieved by the actuator.

The actuator 12 may be any kind of mechanism that is able to provide a movement to the bar. The actuator may be for example electric, hydraulic, pneumatic actuator. The actuator may comprise a piston providing a reciprocating motion which may be linear. When the battery cage kick stand is installed to the battery cage, the actuator is fastened to the battery cage so that the actuator itself does not move linearly. The actuator may be fastened to the battery cage so that it may rotate.

The bar may comprise a support flange 17 arranged at the end of the bar, which end is towards the ground when the battery cage kick stand is in use. The support flange 17 is a plate-like structure having a greater diameter than the bar for providing greater support area. The support flange 17 may be circular, rectangular or square. The cross-sectional shape of the bar may be square, circle or rectangle.

The bar 11 may be made of metal or other material suitable for supporting heavy battery cages, which may weigh for example 10t. The bar 11 may be solid or it may be hollow.

In extended position, the bar may be completely outside the perimeter of the battery cage. Optionally, the bar is partly outside of the perimeter of the battery cage and partly inside the battery cage depending how long the bar is and/or the shape of the ground surface wherein the kick stand is supported.

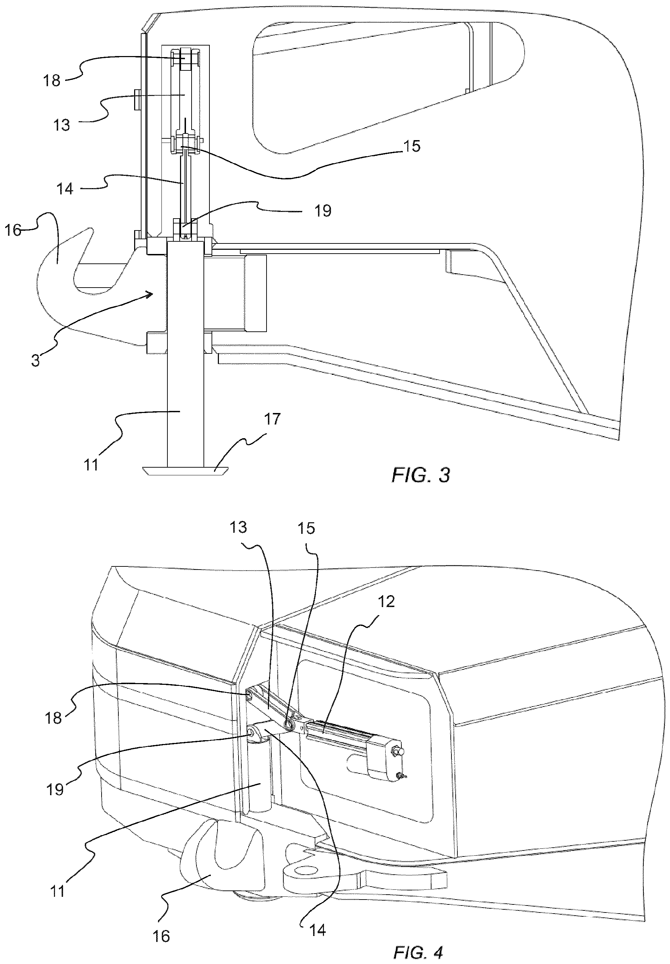

Figure 3 shows a cross-section of a side view of the battery cage comprising a battery cage kick stand in extended position. The battery cage 1 may comprise an opening 3 which is extending into the battery cage 1 and the bar 11 is exposed through the opening, i.e. the bar may be seen through the opening 3. It should be understood that the opening may be for example a cavity as it does not need to extend all the way through the battery cage. The opening 3 may extend into the battery cage in perpendicular direction to the bar 11. The battery cage 1 may comprise a towing element 16, which may be for example a hook or loop. The towing element 16 is configured to be fastened to the bar 11 through the opening 3. Thus, the bar 11 may be used as a support structure for the battery cage as well as a towing support for towing the battery cage. The towing element 16 is fastened to the bar 11 so that the bar 1 may move between the retracted position and the extended position.

Figure 4 shows similar battery cage as in figures 1 to 3 but the bar is in retracted position. In retracted position, the bar 11 is retracted inside the battery cage. The bar may be completely inside the perimeter of the battery cage or, optionally, the bar is partly outside of the perimeter of the battery cage. In latter case, the bar is still mostly inside the battery cage, but for example, the support flange 17 may be still outside of the battery cage.

The battery cage kick stand 10 may comprise at least two levers, i.e. a first lever 13 and a second lever 14. The levers may be rotatable in the same plane. As seen in figures 2 to 4, the first lever 13 is hingedly connected to the battery cage by first hinge means 18. The second lever 14 is hingedly connected to the bar 11 by second hinge means 19. The first hinge means 18 and the second hinge means 19 are aligned with the bar, i.e. a straight line through the hinge means and the bar may be drawn. The first lever 13 is extending from the first hinge means 12 and the second lever 14 is extending from the second hinge means 19 towards each other so that they are connected to each other and to the actuator with third hinge means 15, i.e. the first lever 13 and the second lever 14 are connected to the third hinge means in the actuator, so that the levers are rotatable in a same plane. When the bar 11 is in extended position, the third hinge means 15 are aligned with the first hinge means 18, second hinge means 19 and the bar 11, whereby the first lever 13, second lever 14 and the bar 11 are aligned as seen in figures 2 and 3. When the bar 11 is not in extended position, the third hinge means 15 are not aligned with other hinge means and the bar 11, and an angle is formed between the first lever 13 and the second lever 14 at the third hinge means 15, as seen in figure 4. In operation, to move the bar towards the extended position, the actuator providing linear reciprocating motion is pushing the third hinge means 15 so that the angle between the first lever 13 and the second lever 14 grows and the second lever 14 is pushing the bar 11 outside the battery cage 1. The extended position is achieved when the angle is 180 degrees, i.e. the levers are aligned. To retract the bar 11 towards the retracted position, the actuator 12 is pulling the third hinge means 15 and the angle between the first lever 13 and the second lever 14 gets smaller and the second lever 14 is retracting the bar 11 inside the battery cage 1.

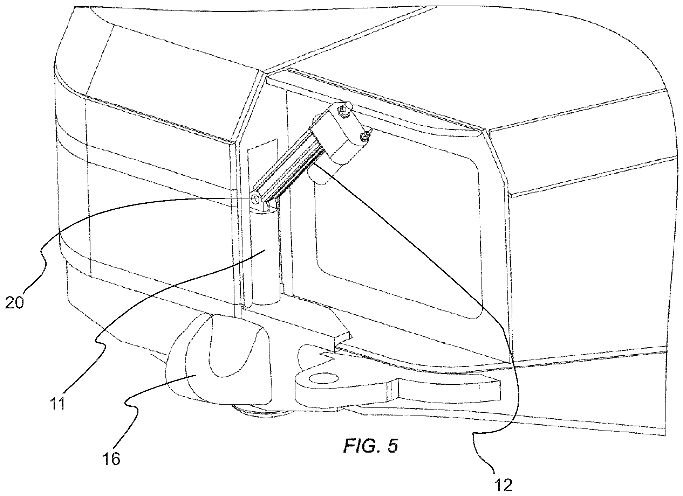

Figure 5 shows another embodiment of the battery cage kick stand, wherein the actuator 12 is directly connected to the bar 11 by fourth hinge means 20.

Although the invention has been the described in conjunction with a certain type of device, it should be understood that the invention is not limited to any certain type of device. While the present inventions have been described in connection with a number of exemplary embodiments, and implementations, the present inventions are not so limited, but rather cover various modifications, and equivalent arrangements, which fall within the purview of prospective claims.

## Claims

1. A battery cage kick stand (10) of an underground mining vehicle comprising a bar (11) and an actuator (12), wherein
- the battery cage kick stand (10) is arranged to be installed to a battery cage having a perimeter so that the bar (11) is movable between retracted position and extended position so that in retracted position, the bar (11) is at least partly retracted inside the perimeter of the battery cage and, in extended position, the bar (11) is at least partly extended outside of the perimeter of the battery cage for supporting the battery cage to the ground, and
- the actuator (12) is hingedly connected to the bar (11) for moving the bar between the retracted position and the extended position.

2. The battery cage kick stand according to claim 1, comprising at least two levers, wherein
- a first lever (13) is hingedly connectable to a battery cage of the underground mining vehicle, and hingedly connected to the actuator (),
- a second lever (14) is hingedly connected to the bar (11) and to the actuator (12).

3. The battery cage kick stand according to claim 2, wherein the first lever (13), the second lever (14) and the bar (11) are aligned, when the bar is in the extended position.

4. The battery cage kick stand according to claim 2 or 3, wherein the first lever (13) and the second lever (14) are connected to third hinge means (15) in the actuator (12) so that the levers are rotatable in a same plane.

5. The battery cage kick stand according to claim 4, wherein an angle is formed between the first lever (13) and the second lever (14) extending from the third hinge means (15) when the bar (11) is not in the extended position.

6. The battery cage kick stand according to any one of the preceding claims 1 to 5, wherein the actuator (12) is configured to provide reciprocating motion causing the movement of the bar (11).

7. The battery cage kick stand according to claim 6, wherein the reciprocating motion is linear motion having a direction which differs from the direction of the bar (11) movement.

8. The battery cage kick stand according to any one of the preceding claims 1 to 7, wherein the actuator (12) is hydraulic, pneumatic or electric actuator.

9. The battery cage kick stand according to any one of the preceding claims 1 to 8, wherein the bar (11) is configured receive a towing element (16).

10. A battery cage (1) of an underground mining vehicle, comprising a battery cage kick stand (10) according to any one of the preceding claims, wherein the battery cage (1) comprises an opening (3) extending into the battery cage, wherein the bar is exposed through the opening (3).

11. The battery cage according to claim 10, wherein a towing element (16) is configured to be fastened to the bar through the opening (3).

12. The battery cage according to claim 10 or 11, wherein, in extended position, the bar (11) is extending outside of the perimeter of the battery cage for supporting the battery cage to the ground.

13. The battery cage according to any one of the preceding claims 10 to 12, wherein the battery cage kick stand (10) is enclosed by a housing (2) of the battery cage.

14. An underground mining vehicle comprising a battery cage according to any one of claims 10 to 13.
